# EUROPÄISCHE PATENTSCHRIFT

(11) **EP 1 702 717 B1**
(45) Veröffentlichungstag und Bekanntmachung des Hinweises auf die Patenterteilung: **27.08.2008**
(21) Anmeldenummer: 06004900.4
(22) Anmeldetag: 10.03.2006
(51) Int. Cl.: B24C 3/04, B24C 9/00, B25J 19/00

(54) **Sandstrahlvorrichtung mit einer Sandstrahlkabine und einem Roboter mit einem Roboterarm zur Bedienung einer Sandstrahldüse**
Sand blasting device and sand blasting booth with robot and robot arm for operating a sand blast nozzle
Dispositif de sablage et cabine de sablage avec robot et bras de robot pour manoeuvrer une buse de sablage

(30) Priorität: 14.03.2005 DE 102005011598
(43) Veröffentlichungstag der Anmeldung: 20.09.2006
(73) Patentinhaber: Kraus, Hans-Jürgen, 89438 Weisingen (DE)
(72) Erfinder: Kraus, Hans-Jürgen, 89438 Weisingen (DE)
(74) Vertreter: Binder, Armin

(56) Entgegenhaltungen:
- EP-A- 0 396 815
- DE-A1- 1 952 765
- DE-U1-3202004 006 81
- FR-A- 2 448 667
- US-A1- 2002 159 868

## Beschreibung

Die Erfindung betrifft eine Sandstrahlvorrichtung nach Anspruch 1.

Aus der Schrift US 2002/159868 A1 sind Sandstrahlvorrichtungen bekannt, die eine Kabine aufweisen, in der sich das zu strahlende Gut befindet, wobei häufig die bisher manuell ausgeführten Sandstrahlarbeiten durch Roboter ausgeführt werden, die neben ihrer Steuerung einen Arm aufweisen, an dessen Ende eine Sandstrahldüse angesetzt ist. Der Roboter selbst befindet sich dabei außerhalb der Kabine und nur der Roboterarm reicht durch eine Öffnung in die Kabine hinein. Zur Abdichtung der Öffnung wurden bisher Dichtmanschetten aus beschichteten Gewebe benutzt. Derartige Dichtmaterialien weisen jedoch in der rauen und abrasiven Umgebung zu geringe Standzeiten auf und müssen häufig gewechselt werden. Auch wäre eine bessere Flexibilität wünschenswert, da durch die unflexible Struktur solcher Gewebe entweder die Bewegung des Roboterarms zu weit eingeschränkt ist oder zu viel Gewebefläche verwendet werden muss, die gegebenenfalls bei der Bewegung des Roboterarms im Wege sein kann.

Es ist daher Aufgabe der Erfindung, eine Strahlvorrichtung mit einer Strahlkabine und Sandstrahlroboter zu finden, bei der die Abdichtung zwischen Roboterarm und Strahlkabine standfester ist und eine bessere Flexibilität aufweist.

Die Aufgabe wird durch die Merkmale des Anspruches 1 gelöst.

Demgemäß schlagen die Erfinder vor, die an sich bekannte Sandstrahlvorrichtung mit einer Sandstrahlkabine, einem Roboter mit einem Roboterarm zur Bedienung einer Sandstrahldüse, wobei eine Fenstermanschette mit einem Grundkörper und zwei Anschlussflanschen zur flexiblen Abdichtung an einer Öffnung in der Sandstrahlkabine angebracht sind, wobei ein erster großer Anschlussflansch an der Strahlkabine befestigt und ein zweiter kleiner Flansch am Roboterarm, der in die Sandstrahlkabine hineinreicht, befestigt ist, dahingehend zu verbessern, dass zumindest der Grundkörper der Fenstermanschette aus Naturkautschuk besteht und mehrere Zugbänder aufweist, die zumindest größtenteils aus Naturkautschuk bestehen.

Hierdurch wird erreicht, dass der Roboter im Bewegungsablauf seiner Achsen nicht behindert wird, da die Fenstermanschette durch die hohen Dehnwerte des Naturkautschuks den Bewegungen folgt. Gleichzeitig besitzt die Naturkautschukgummimischung eine sehr hohe Beständigkeit gegenüber den Strahlmedien. Der Grundkörper kann einfach durch entsprechende Abwicklungen der Form auf plattenförmigem Grundmaterial und anschließendem Verbinden der Abwicklungen durch Heißvulkanisation konfektioniert werden. Dadurch, dass die Verbindungsstellen durch Heißvulkanisation hergestellt werden, erhalten sie die gleichen mechanischen Eigenschaften wie der Rest des Grundkörpers. Auch die erfindungsgemäße Ausgestaltung der Zugbänder bewirkt, dass diese ebenfalls einen ausreichenden Schutz gegen Verschleiß zu besitzen.

Vorteilhaft kann auch der erste Anschlussflansch aus Naturkautschuk hergestellt werden, wobei es günstig ist, diesen stabiler als den Grundkörper auszuführen. Beispielsweise kann hierfür einfach dickeres Material verwendet werden.

Ebenso oder zusätzlich kann der erste Anschlussflansch durch ein Textilgewebe verstärkt und/oder durch eine Metalleinlage und/oder Metallauflage verstärkt werden. Grundsätzlich sollte dabei darauf geachtet werden, dass alle Textil- oder Metallflächen zumindest zur Strahlkabineninnenseite hin durch Naturkautschuk bedeckt sind, damit auch hier ausreichender Schutz gegen Verschleiß besteht.

Falls die Dehnbarkeit der Fenstermanschette nicht vorrangig ist, kann der Grundkörper vollständig durch ein innenliegendes Textilgewebe verstärkt werden. Anderenfalls kann es jedoch sehr vorteilhaft sein, den Grundkörper nur in seinem Übergangsbereich zum Flansch durch Textilgewebe zu verstärken. Hierdurch wird in diesem Übergangsbereich, der besonders anfällig für Rissbildung ist, diese Rissbildung stark minimiert und gleichzeitig jedoch die Dehnbarkeit und Flexibilität des Grundkörpers erhalten.

Vorteilhaft kann der zweite Anschlussflansch als Rohranschlussflansch ausgebildet werden, der dann einfach auf ein entsprechendes Gegenstück am Roboterarm geschoben und fixiert werden kann. Auch dieser zweite Anschlussflansch kann durch ein Textilgewebe und/oder durch eine Metalleinlage und/oder Metallauflage verstärkt werden.

Des weiteren kann der Grundkörper der Fenstermanschette konische ausgebildet werden, wobei der zweite Anschlussflansch nicht unbedingt in der Mitte des ersten Flansches liegen muss. Es kann auch eine asymmetrische Anordnung verwendet werden, die gegebenenfalls günstiger für die Bewegungsfreiheit des Roboterarms in Bezug auf die tatsächlich ausgeführten Bewegungen ist.

Besonders vorteilhaft ist es, wenn die Zugbänder beispielsweise radial vom zweiten Anschlussflansch nach Außen verlaufen oder auch entlang der, bei Bewegung des Roboterarms am meisten belasteten Regionen des Grundkörpers aufgebracht sind.

Die Zugbänder können auf den Grundkörper aufgebracht werden, indem der Grundkörper in Längsrichtung des Zugbandes gedehnt wird und der Grundkörper im gedehnten Zustand mit den Zugbändern stellenweise vervulkanisiert wird. Hierdurch wird eine Faltenbildung im Grundkörper und Zerreißen des Grundkörpers weitgehend verhindert und dem Grundkörper bei einer entsprechenden Bewegung des Roboterarms eine zusätzliche Festigung gegeben. Außerdem bilden sich keine Sandstrahltaschen. Bei besonderen Beanspruchungen können bei dieser Variante die Zugbänder auch eine Textilverstärkung aufweisen.

Eine andere Möglichkeit des Aufbringens von Zugbändern auf den Grundkörper besteht darin, dass die Zugbänder gedehnt und mit dem nicht vorgedehnten Grundkörper stellenweise vervulkanisiert werden.

Weiterhin kann der erste Anschlussflansch eine rechteckige oder eine runde oder ovale Form aufweisen, wobei die Fensteröffnung in der Strahlkabine entsprechen ausgebildet sein sollte.

Auch kann der zweite Anschlussflansch eine rechteckige Form oder eine runde oder ovale Form aufweisen, je nachdem, welche Form der Anschluss im Bereich des Roboterarms aufweist.

Ergänzend zur Fenstermanschette kann auch eine Arm-Manschette vorgesehen werden, die zumindest den in die Strahlkabine hineinreichenden Teil des Roboterarms umgibt und einen länglich hohlen Basiskörper, zumindest teilweise aus Naturkautschuk bestehend, mit zwei endseitigen Anschlussflanschen aufweist.

Hierdurch kann die Fenstermanschette relativ weit hinten am Roboterarm angreifen und der vordere Teil des Roboterarms, der die Strahldüse trägt, wird durch die Arm-Manschette geschützt. Die Beweglichkeit des Roboterarms bleibt damit maximal, während gleichzeitig die Fenstermanschette weit von der Strahldüse entfernt bleibt und damit weniger dem Verschleiß ausgesetzt ist.

Auch der erste Anschlussflansch der Arm-Manschette kann aus Naturkautschuk bestehen und gegebenenfalls durch ein Textilgewebe und/oder durch eine Metalleinlage und/oder Metallauflage verstärkt werden.

Ebenso kann der Basiskörper der Arm-Manschette durch ein Textilgewebe verstärkt werden, jedoch verliert er damit einen wesentlichen Teil seiner Flexibilität.

Außerdem kann der erste und/oder der zweite Anschlussflansch der Arm-Manschette ein Rohranschlussflansch sein. Weiterhin kann auch der zweite Anschlussflansch der Arm-Manschette durch ein Textilgewebe und/oder durch eine Metalleinlage und/oder Metallauflage verstärkt werden.

Vorteilhaft wird der Basiskörper der Arm-Manschette eine zylindrische bis leicht konische Form aufweisen, wobei sich meist der Konus in Richtung Strahlwerkzeug verjüngen wird.

Entsprechend der Fenstermanschette können auch die Zugbänder auf den Basiskörper aufgebracht werden, indem der Basiskörper in Längsrichtung der Zugbänder gedehnt wird und der Basiskörper im gedehnten Zustand mit den Zugbändern stellenweise vervulkanisiert wird. Dabei können die Zugbänder des Basiskörpers der Arm-Manschette eine Textilverstärkung aufweisen.

Andererseits können die Zugbänder auch auf den Basiskörper aufgebracht werden, indem die Zugbänder gedehnt und mit dem nicht gedehnten Basiskörper stellenweise vervulkanisiert werden.

Wenn der erste Anschlussflansch der Arm-Manschette eine kompatible Form zum zweiten Anschlussflansch des Grundkörpers der Fenstermanschette aufweist, können diese problemlos miteinander verbunden werden. Allerdings ist es auch möglich, bei unterschiedlichen Flanschformen oder -maßen einen entsprechenden Zwischenflansch zu verwenden, der die unterschiedlichen Maße adaptiert.

Weiterhin kann der zweite Anschlussflansch der Arm-Manschette eine runde oder ovale Form oder auch eine rechteckige Form aufweisen.

Zum besseren Anschluss an der Roboterarm im Bereich der Sandstrahldüse kann die Arm-Manschette im Bereich des zweiten Anschlussflansches eine Verjüngung aufweisen. Vorzugsweise weist die Verjüngung der Arm-Manschette im Bereich des zweiten Anschlussflansches ein Kopfstück mit einem Übergang von einem Zylinder mit großem Durchmesser zu einem Zylinder mit kleinem Durchmesser auf, wobei der Übergang des Kopfstückes vorteilhaft zumindest teilweise halbkugelförmig ausgebildet sein kann. Außerdem kann dieses Kopfstück über zusätzliche Stege verfügen, die den Kopfbereich verstärken und schützen.

Zusätzliche Merkmale und Vorteile der Erfindung ergeben sich aus der nachfolgenden Beschreibung bevorzugter Ausführungsbeispiele unter Bezugnahme auf die Zeichnungen.

Die Erfindung soll nachfolgend anhand der Zeichnungen näher erläutert werden, wobei nur die zum Verständnis der Erfindung wesentliche Merkmale gezeigt sind. Es stellen im Einzelnen dar:
- Figur 1:: Sandstrahlvorrichtung mit Strahlkabine und Roboter in schematischer 3D-Darstellung;
- Figur 2:: Aufsicht auf eine Fenstermanschette mit rechteckigem kabinenseitigen Flansch;
- Figur 3:: Seitenansicht der breiten Seite der Fenstermanschette;
- Figur 4:: Seitenansicht der schmalen Seite der Fenstermanschette;
- Figur 5:: Detailansicht aus Figur 4;
- Figur 6:: Abwicklung der Fenstermanschette aus Figur 2;
- Figur 7:: 3D-Rückansicht einer Sandstrahlvorrichtung;
- Figur 8:: 3D-Vorderansicht einer Sandstrahlvorrichtung;
- Figur 9:: Seitenansicht einer Fenstermanschette mit zwei runden und exzentrisch angeordneten Flanschen;
- Figur 10:: Aufsicht auf eine Fenstermanschette mit zwei runden und exzentrisch angeordneten Flanschen;
- Figur 11:: Seitenansicht einer Fenstermanschette mit zwei runden und konzentrisch angeordneten Flanschen;
- Figur 12:: Aufsicht auf eine Fenstermanschette mit zwei runden und konzentrisch angeordneten Flanschen;
- Figur 13:: Seitenansicht einer Fenstermanschette mit einem ovalen großen und einem viereckigen kleinen Flansch;
- Figur 14:: Aufsicht auf eine Fenstermanschette mit einem ovalen großen und einem viereckigen kleinen Flansch;
- Figur 15:: Andere Seitenansicht der Fenstermanschette aus Figur 13;
- Figur 16:: Schrägansicht der Fenstermanschette aus Figur 13;
- Figuren 17-20:: Arm-Manschette in vier verschiedenen Ansichten;
- Figuren 21-24:: Arm-Manschette mit Stegen am Kopfstück in vier verschiedenen Ansichten.

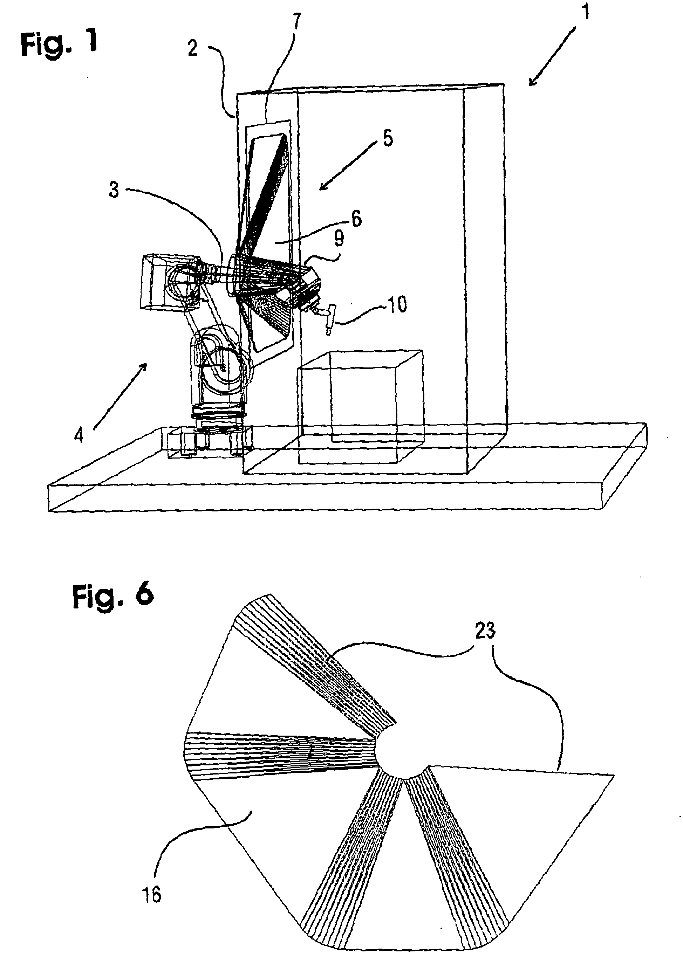

Die **Figur 1** zeigt eine Sandstrahlvorrichtung 1 mit einer Sandstrahlkabine 2, in die der Roboterarm 3 eines Sandstrahlroboters 4 durch eine Öffnung 5 hineinragt. Die Öffnung 5 wird erfindungsgemäß durch eine Fenstermanschette 6 abgedichtet. Die Fenstermanschette 6 hat einen rechteckigen Strahlkabinenanschlussflansch 7, der an die der Öffnung 5 der Strahlkabine 2 angeflanscht ist. Gleichzeitig besitzt die Fenstermanschette 6 armseitig einen runden Rohrflansch 8, der zum Roboterarm 3 hin abdichtet. An diesem Rohrflansch ist gleichzeitig eine Arm-Manschette 9 mit einem Rohrflansch angeschlossen, die den, in die Strahlkabine hineinreichenden Teil des Roboterarms 3 umschließt und vorne bis in den Anschlussbereich der Strahldüse 10 reicht.

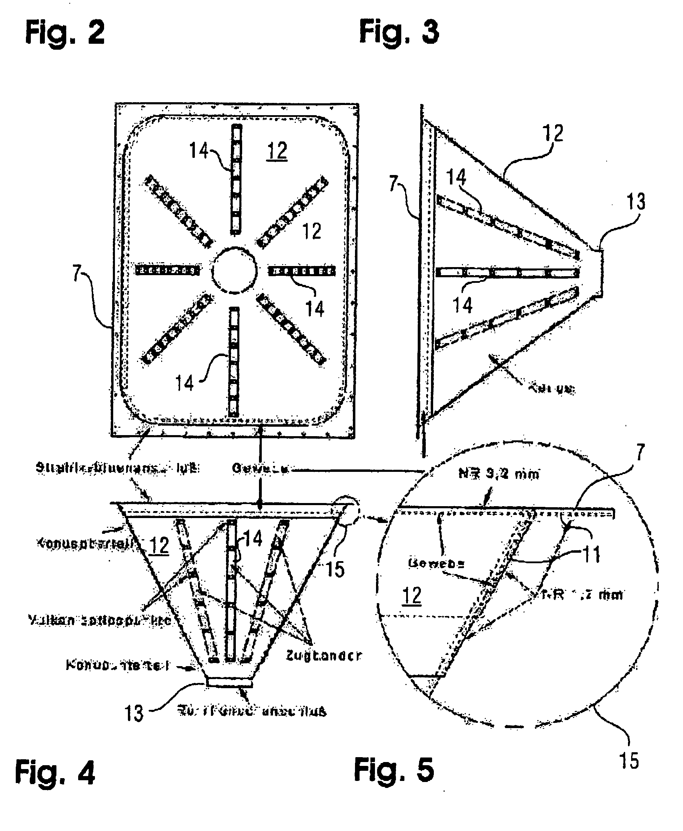

Die Fenstermanschette 6 der Figur 1 wird in den Figuren 2 bis 5 detailliert dargestellt. Die **Figur 2** zeigt eine Aufsicht, die **Figuren 3** und **4** eine Seitenansicht der Fenstermanschette 6. Diese besteht aus einem strahlkabinenseitigen Anschlussflansch 7 aus Naturkautschuk, der durch eine Gewebeeinlage 11 verstärkt wird. An diesem Anschlussflansch 7 ist der konische Grundkörper 12, ebenfalls aus Naturkautschuk bestehend, anvulkanisiert. Roboterarmseitig ist ein kleiner runder Rohrflansch 13 anvulkanisiert. Im Bereich der Anschlussflansche ist der Grundkörper zusätzlich mit einer Gewebeeinlage 11 verstärkt. Des weiteren sind auf dem Grundkörper mehrere Zugbänder 14 stellenweise anvulkanisiert.

Für den Strahlkabinenanschluss wird dabei der Rechteckflansch 7 durch schichtweisen Aufbau aus Naturkautschukplattenzuschnitten, beispielsweise mit 3,2 mm Dicke, und der Gewebeeinlage 11 in Kaltverklebung vorbereitet. Für die kraftschlüssige Verbindung des Rechteckflansches und des Konusoberteiles geht das Gewebe 11 vom Flansch in den Konus über, wo es ebenfalls durch Kaltverklebung verbunden wird. Als Abdeckung und als Zugentlastung wird von außen auf das Gewebe und am Konus darüber hinaus eine Naturkautschukabwicklung, hier mit 1,2 mm Dicke, kalt aufgeklebt.
Für die kraftschlüssige Verbindung des Rohrflansches 13 mit dem Konusunterteil wird aus einem, hier 2,4 mm dicken, Naturkautschukstreifen ein Schlauchring durch Heißvulkanisation hergestellt und durch Heißvulkanisation mit dem Konus verbunden.

Für die Zugbänder 14 werden im vorliegenden Beispiel Streifen aus Naturkautschuk mit 5 mm Dicke vorgefertigt und unter Vorspannung mehrmals pro Zugband punktweise auf die Außenseite des Konus durch Heißvulkanisation aufgebracht. Bei der Entspannung der Zugbänder wird die Konusfläche konzentrisch im Bereich zwischen den vulkanisationspunkten zusammengerafft.

Der Bereich des fensterseitigen Anschlussflansches mit dem Detail 15 aus Figur 4 ist in der **Figur 5** nochmals vergrößert dargestellt. Hier wird die Anordnung der beispielhaften Gewebeeinlage 11 im Flanschbereich nochmals verdeutlicht.

Die Herstellung des Grundkörpers wird an Hand der **Figur 6** beschrieben. Dort ist die Abwicklung 16 des konusförmigen Grundkörpers auf ebenen Naturkautschukplatten dargestellt, die dann am Vulkanisierrand 23 durch Heißvulkanisation verbunden wird und so den Konus erzeugt. Im konkreten Beispiel wird für die Konusabwicklung 16 aus eine 2,4 mm dicken Naturkautschukplatte verwendet.

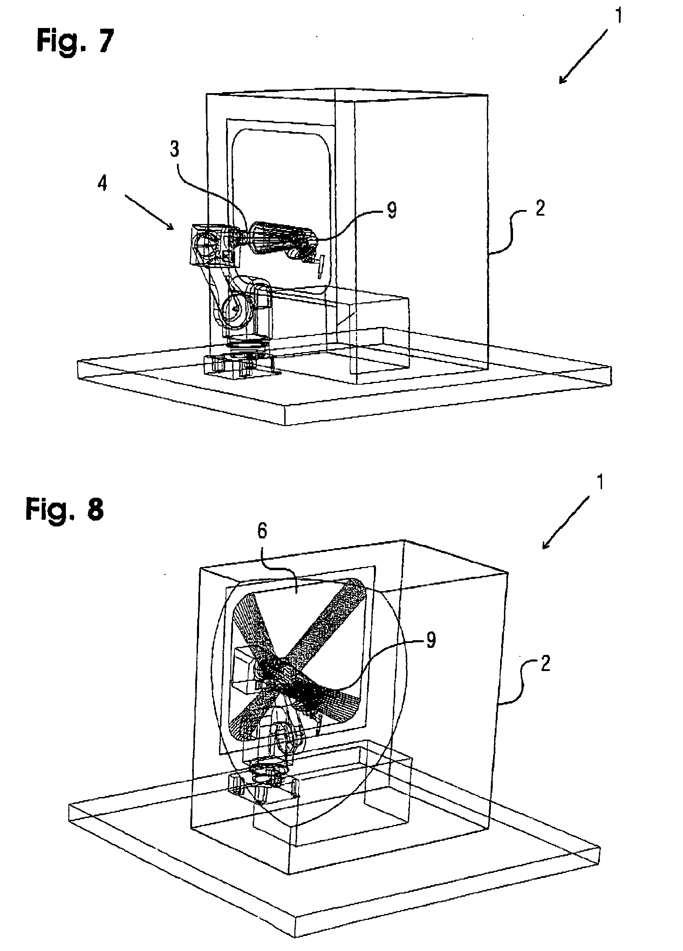

Die **Figuren 7 und 8** zeigen zwei Perspektiven einer erfindungsgemäßen Sandstrahlvorrichtung 1 mit dem Sandstrahlroboter 4, dessen Roboterarm 3 durch eine Fenstermanschette 6 und eine Arm-Manschette 9 zur Strahlkabine 2 hin abgedichtet ist. In der Figur ist zur besseren Darstellung die Fenstermanschette weggelassen worden und nur die Arm-Manschette 9 am Roboterarm 3 gezeigt.

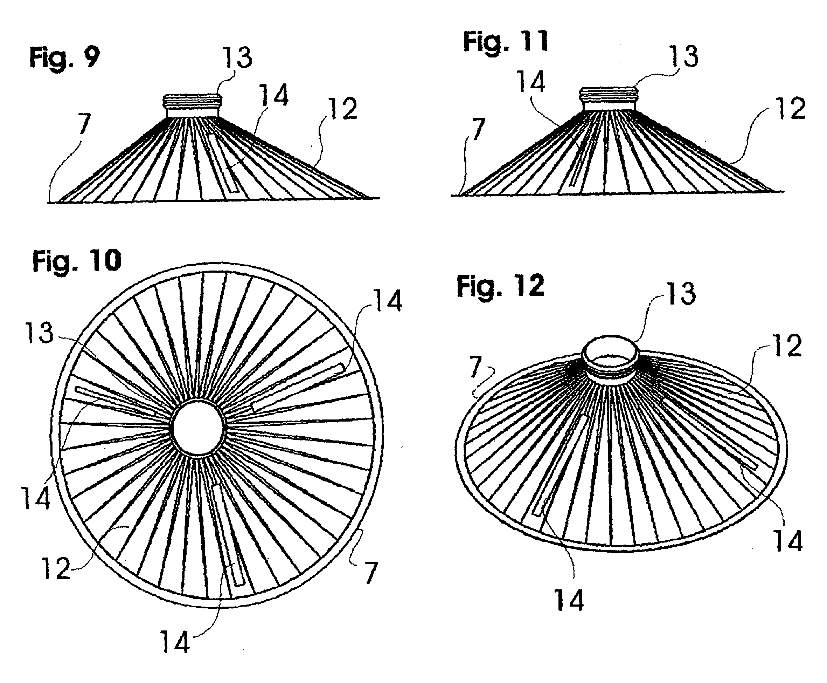

Die Figuren **9 und 10** zeigen eine Seitenansicht und eine Aufsicht auf eine Fenstermanschette 6 mit beidseits runden Anschlussflanschen 7 und 8, wobei diese exzentrisch zueinander angeordnet sind. Zusätzlich sind drei Zugbänder 14 unterschiedlicher Größe auf dem Grundkörper stellenweise befestigt.

Die Figuren **11 und 12** zeigen eine Seitenansicht und eine Schrägansicht auf eine Fenstermanschette 6 mit ebenfalls beidseits runden Anschlussflanschen 7 und 8, wobei diese hier konzentrisch zueinander angeordnet sind. Zusätzlich sind auch hier drei Zugbänder 14 auf dem Grundkörper stellenweise befestigt.

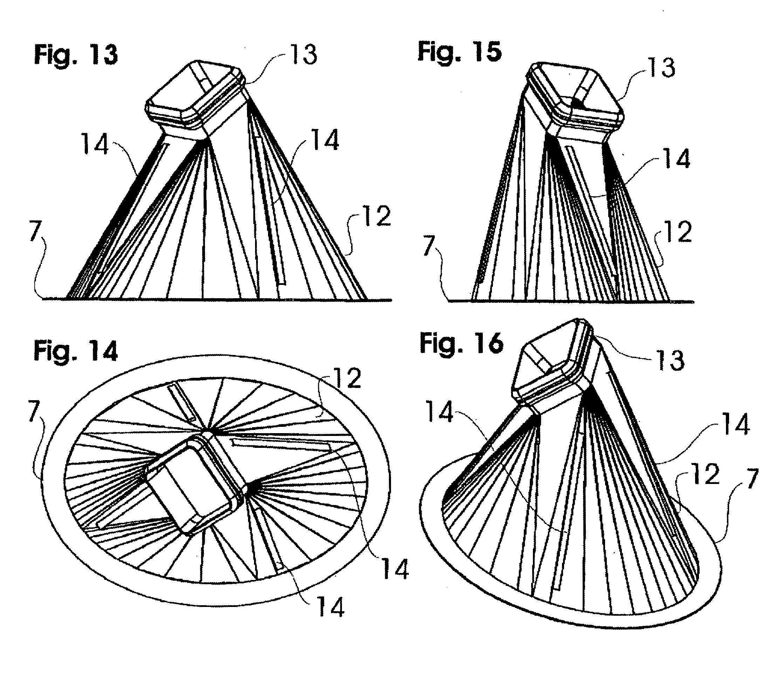

Die Figuren **13 bis 16** zeigen verschiedene Ansichten einer anderen Variante der erfindungsgemäßen Fenstermanschette 6 mit einem runden Anschlussflansch 7 für die Strahlkabinenöffnung und einem eckigen roboterarmseitigen Flansch 8. Auch hier sind Zugbänder 14 angebracht.

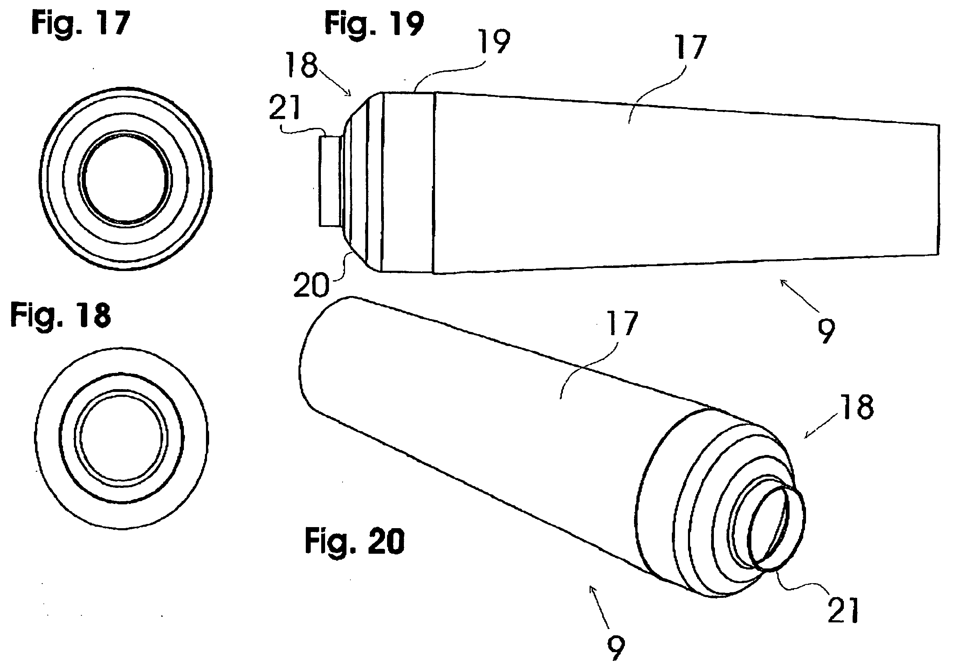

Eine erste Variante der erfindungsgemäßen Arm-Manschette 9 ist in den Figuren 17 bis 20 in unterschiedlichen Perspektiven dargestellt. Die **Figur 17** zeigt die Frontalansicht der Arm-Manschette von der Kopfseite und die **Figur 18** von der Rückseite aus. Eine Seitenansicht ist in **Figur 19** dargestellt. Dort ist der sich zum Kopf 18 hin leicht konisch erweiternde Basiskörper 17 zu erkennen, der in einen ersten zylindrischen Teil 19 des Kopfes 18 übergeht. Der Kopf 18 besteht aus einer weniger flexiblen Struktur als der Basiskörper 17 und geht vom ersten zylindrischen Abschnitt 19 in einen etwa halbkugelförmigen Abschnitt 20 über, dem eine wiederum zylindrischer Endabschnitt 21 folgt. Dieser Endabschnitt 21 kann einfach auf einen Rohrflansch am Ende des Roboterarms aufgezogen werden und dichtet gut ab. Zusätzlich kann dort eine Rohrschelle angebracht werden, um ein Verrutschen zu vermeiden. Der Basiskörper 17 wird dabei über den Roboterarm gestülpt und mit dem relativ flexiblen offenen Ende über den kleinen Rohrflansch der Fenstermanschette gestülpt und ebenfalls mit einer Rohrschelle befestigt. Die **Figur 20** zeigt eine Schrägansicht der Arm-Manschette 9 aus den Figuren 17 bis 20.

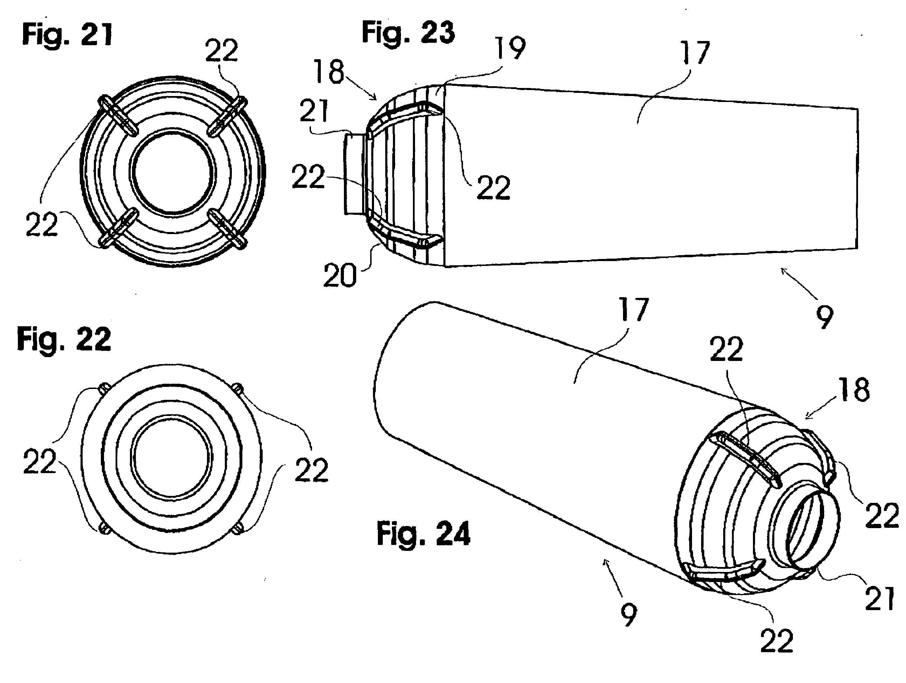

Die **Figuren 21 bis 24** zeigen die gleichen Ansichten verbesserten Arm-Manschetten 9 wie die Figuren 17 bis 20. Der Unterschied der Arm-Manschette 9 besteht darin, dass diese am Kopf 18 zusätzliche Stege 22 aufweist, die sowohl zur Verstärkung des Kopfstückes 18 als auch zum Schutz des Kopfstückes 18 gegen Kollisionen mit sandzustrahlenden Gegenständen dient.

### Bezugszeichenliste

- 1: Sandstrahlvorrichtung
- 2: Sandstrahlkabine
- 3: Roboterarm
- 4: Roboter
- 5: Öffnung
- 6: Fenstermanschette
- 7: Strahlkabinenanschlussflansch
- 8: Rohrflansch
- 9: Arm-Manschette
- 10: Strahldüse
- 11: Gewebeeinlage
- 12: Grundkörper
- 13: Rohrflansch
- 14: Zugbänder
- 15: Detail-Auszug
- 16: Abwicklung
- 17: Basiskörper
- 18: Kopfstück
- 19: zylindrischer Teil des Kopfstückes
- 20: halbkugelförmiger Abschnitt des Kopfstückes
- 21: Endabschnitt des Kopfstückes
- 22: Stege
- 23: Vulkanisierrand

## Patentansprüche

1. Sandstrahlvorrichtung (1) mit einer Sandstrahlkabine (2), einem Roboter (4) mit einem Roboterarm (3) zur Bedienung einer Sandstrahldüse (10), wobei eine Fenstermanschette mit einem Grundkörper (12) und zwei Anschlussflanschen (7, 13) zur flexiblen Abdichtung an einer Öffnung (5) in der Sandstrahlkabine (2) angebracht sind, wobei ein erster großer Anschlussflansch (7) an der Strahlkabine (2) befestigt und ein zweiter kleiner Flansch (13) am Roboterarm, der in die Sandstrahlkabine (2) hineinreicht, befestigt ist, **dadurch gekennzeichnet, dass** zumindest der Grundkörper (12) der Fenstermanschette (6) aus Naturkautschuk besteht und mehrere Zugbänder (14) aufweist, die zumindest größtenteils aus Naturkautschuk bestehen.

2. Sandstrahlvorrichtung gemäß dem voranstehenden Patentanspruch 1, **dadurch gekennzeichnet, dass** der erste Anschlussflansch (7) aus Naturkautschuk besteht.

3. Sandstrahlvorrichtung gemäß einem der voranstehenden Patentansprüche 1 bis 2,**dadurch gekennzeichnet, dass** der erste Anschlussflansch (7) durch ein Textilgewebe (11) verstärkt ist.

4. Sandstrahlvorrichtung gemäß einem der voranstehenden Patentansprüche 1 bis 3, **dadurch gekennzeichnet, dass** der erste Anschlussflansch (7) durch eine Metalleinlage und/oder Metallauflage verstärkt ist.

5. Sandstrahlvorrichtung gemäß einem der voranstehenden Patentansprüche 1 bis 4, **dadurch gekennzeichnet, dass** der Grundkörper (12) der Fenstermanschette zumindest teilweise, vorzugsweise im Übergangsbereich mindestens eines Flansches, durch ein Textilgewebe (11) verstärkt ist.

6. Sandstrahlvorrichtung gemäß einem der voranstehenden Patentansprüche 1 bis 3, **dadurch gekennzeichnet, dass** der zweite Anschlussflansch (13) ein Rohranschlussflansch ist.

7. Sandstrahlvorrichtung gemäß einem der voranstehenden Patentansprüche 1 bis 6, **dadurch gekennzeichnet, dass** der zweite Anschlussflansch (13) durch ein Textilgewebe verstärkt ist.

8. Sandstrahlvorrichtung gemäß einem der voranstehenden Patentansprüche 1 bis 7, **dadurch gekennzeichnet, dass** der zweite Anschlussflansch (13) durch eine Metalleinlage und/oder Metallauflage verstärkt ist.

9. Sandstrahlvorrichtung gemäß einem der voranstehenden Patentansprüche 1 bis 8, **dadurch gekennzeichnet, dass** der Fenstermanschettengrundkörper (12) eine konische Form aufweist.

10. Sandstrahlvorrichtung gemäß einem der voranstehenden Patentansprüche 1 bis 9, **dadurch gekennzeichnet, dass** die Zugbänder (14) des Fenstermanschettengrundkörpers (12) radial vom zweiten Anschlussflansch (13) nach Außen verlaufen.

11. Sandstrahlvorrichtung gemäß einem der voranstehenden Patentansprüche 1 bis 9, **dadurch gekennzeichnet, dass** die Zugbänder (14) entlang der, bei Bewegung des Roboterarms (3) am meisten belasteten Regionen des Grundkörpers (12) aufgebracht sind.

12. Sandstrahlvorrichtung gemäß einem der voranstehenden Patentansprüche 1 bis 11, **dadurch gekennzeichnet, dass** die Zugbänder (14) auf den Grundkörper (12) aufgebracht werden, indem der Grundkörper (12) in Längsrichtung der Zugbänder (14) gedehnt wird und der Grundkörper (12) im gedehnten Zustand mit den Zugbändern (14) stellenweise vervulkanisiert wird.

13. Sandstrahlvorrichtung gemäß einem der voranstehenden Patentansprüche 1 bis 12, **dadurch gekennzeichnet, dass** eine Arm-Manschette (9) vorgesehen ist, die zumindest den in die Strahlkabine hineinreichenden Teil des Roboterarms (3) umgibt und einen länglich hohlen Basiskörper (17), zumindest teilweise aus Naturkautschuk bestehend, und vorzugsweise mit einem oder zwei endseitigen Anschlussflansch(en) (21) aufweist.

14. Sandstrahlvorrichtung gemäß einem der voranstehenden Patentansprüche 1 bis 13, **dadurch gekennzeichnet, dass** der Basiskörper (17) der Arm-Manschette (9) mehrere Zugbänder aufweist.

15. Sandstrahlvorrichtung gemäß dem voranstehenden Patentanspruch 14, **dadurch gekennzeichnet, dass** die Zugbänder des Basiskörpers (17) der Arm-Manschette (9) vom ersten zum zweiten Anschlussflansch verlaufen.

## Claims

1. Sand blasting device (1) comprising a sand blasting booth (2) and a robot (4) having a robot arm (3) for operating a sand blasting nozzle (10), wherein a window sleeve having a parent body (12) and two connection flanges (7, 13) for flexible sealing is attached to an opening (5) in the sand blasting booth (2), wherein a first large connection flange (7) is fastened to the blasting booth (2) and a second small flange (13) is fastened to the robot arm, which extends into the sand blasting booth (2), **characterized in that** at least the parent body (12) of the window sleeve (6) is made of natural rubber and has a plurality of tension bands (14) which are at least mostly made of natural rubber.

2. Sand blasting device according to the preceding Patent Claim 1, **characterized in that** the first connection flange (7) is made of natural rubber.

3. Sand blasting device according to either of preceding Patent Claims 1 and 2, **characterized in that** the first connection flange (7) is reinforced by a textile fabric (11).

4. Sand blasting device according to one of the preceding Patent Claims 1 to 3, **characterized in that** the first connection flange (7) is reinforced by a metal insert and/or a metal coating.

5. Sand blasting device according to one of the preceding Patent Claims 1 to 4, **characterized in that** the parent body (12) of the window sleeve is at least partly reinforced, preferably in the transition region of at least one flange, by a textile fabric (11).

6. Sand blasting device according to one of the preceding Patent Claims 1 to 3, **characterized in that** the second connection flange (13) is a tube connection flange.

7. Sand blasting device according to one of the preceding Patent Claims 1 to 6, **characterized in that** the second connection flange (13) is reinforced by a textile fabric.

8. Sand blasting device according to one of the preceding Patent Claims 1 to 7, **characterized in that** the second connection flange (13) is reinforced by a metal insert and/or a metal coating.

9. Sand blasting device according to one of the preceding Patent Claims 1 to 8, **characterized in that** the window sleeve parent body (12) has a conical shape.

10. Sand blasting device according to one of the preceding Patent Claims 1 to 9, **characterized in that** the tension bands (14) of the window sleeve parent body (12) run radially outwards from the second connection flange (13).

11. Sand blasting device according to one of the preceding Patent Claims 1 to 9, **characterized in that** the tension bands (14) are applied along the regions of the parent body (12) which are subjected to the most loading during movement of the robot arm (3).

12. Sand blasting device according to one of the preceding Patent Claims 1 to 11, **characterized in that** the tension bands (14) are applied to the parent body (12) by the parent body (12) being expanded in the longitudinal direction of the tension bands (14) and by the parent body (12) being vulcanized to the tension bands (14) in places in the expanded state.

13. Sand blasting device according to one of the preceding Patent Claims 1 to 12, **characterized in that** an arm sleeve (9) is provided which surrounds at least that part of the robot arm (3) which extends into the blasting booth and has an elongated hollow basic body (17) at least partly made of natural rubber and preferably having one or two end connection flanges (21).

14. Sand blasting device according to one of the preceding Patent Claims 1 to 13, **characterized in that** the basic body (17) of the arm sleeve (9) has a plurality of tension bands.

15. Sand blasting device according to the preceding Patent Claim 14, **characterized in that** the tension bands of the basic body (17) of the arm sleeve (9) run from the first to the second connection flange.

## Revendications

1. Dispositif de sablage (1), avec une cabine de sablage (2), un robot (4) avec un bras de robot (3) pour la commande d'une buse de sablage (10), une manchette de fenêtre, avec un corps de base (12) et deux brides de raccordement (7, 13), étant montée dans la cabine de sablage (2), pour garantir une étanchéité élastique au niveau d'une ouverture (5), une première grande bride de raccordement (7) étant fixée sur la cabine de sablage (2) et une deuxième petite bride (13) étant fixée au bras de robot, qui s'engage dans la cabine de sablage (2), **caractérisé en ce qu'**au moins le corps de base (12) de la manchette de fenêtre (6) est conçu en caoutchouc naturel et comporte plusieurs bandes de traction (14), qui sont au moins en majeure partie conçues en caoutchouc naturel.

2. Dispositif de sablage selon la précédente revendication 1, **caractérisé en ce que** la première bride de raccordement (7) est conçue en caoutchouc naturel.

3. Dispositif de sablage selon l'une des revendications précédentes 1 à 2, **caractérisé en ce que** la première bride de raccordement (7) est renforcée au moyen d'une toile (11).

4. Dispositif selon l'une des revendications précédentes 1 à 3, **caractérisé en ce que** la première bride de raccordement (7) est renforcée au moyen d'une garniture métallique et/ou d'un support métallique.

5. Dispositif de sablage selon l'une des revendications précédentes 1 à 4, **caractérisé en ce que** le corps de base (12) de la manchette de fenêtre est au moins partiellement renforcé au moyen d'une toile (11), de préférence dans la zone de transition d'au moins une bride.

6. Dispositif de sablage selon l'une des revendications précédentes 1 à 3, **caractérisé en ce que** la deuxième bride de raccordement (13) est une bride de raccordement de tuyau.

7. Dispositif de sablage selon l'une des revendications précédentes 1 à 6, **caractérisé en ce que** la deuxième bride de raccordement (13) est renforcée au moyen d'une toile.

8. Dispositif selon l'une des revendications précédentes 1 à 7, **caractérisé en ce que** la deuxième bride de raccordement (13) est renforcée au moyen d'une garniture métallique et/ou d'un support métallique.

9. Dispositif de sablage selon l'une des revendications précédentes 1 à 8, **caractérisé en ce que** le corps de base de manchette de fenêtre (12) présente une forme conique.

10. Dispositif de sablage selon l'une des revendications précédentes 1 à 9, **caractérisé en ce que** les bandes de traction (14) du corps de base de manchette de fenêtre (12) s'étendent radialement vers l'extérieur par rapport à la deuxième bride de raccordement (13).

11. Dispositif de sablage selon l'une des revendications précédentes 1 à 9, **caractérisé en ce que** les bandes de traction (14) sont disposées le long des régions du corps de base (12) qui sont les plus sollicitées lors du mouvement du bras de robot (3).

12. Dispositif de sablage selon l'une des revendications précédentes 1 à 11, **caractérisé en ce que** les bandes de traction (14) sont disposées sur le corps de base (12), en étirant le corps de base (12) dans le sens longitudinal des bandes de traction (14), et en vulcanisant par endroits le corps de base (12) à l'état étiré avec les bandes de traction (14).

13. Dispositif de sablage selon l'une des revendications précédentes 1 à 12, **caractérisé en ce qu'**il est prévu une manchette de bras (9) entourant au moins la partie du bras de robot (3) qui s'engage dans la cabine de sablage, et comportant un corps de base (17) creux et allongé, conçu au moins partiellement en caoutchouc naturel, et de préférence avec une ou deux bride(s) de raccordement (21) à l'extrémité.

14. Dispositif de sablage selon l'une des revendications précédentes 1 à 13, **caractérisé en ce que** le corps de base (17) de la manchette de bras (9) comporte plusieurs bandes de traction.

15. Dispositif de sablage selon la revendication précédente 14, **caractérisé en ce que** les bandes de traction du corps de base (17) de la manchette de bras (9) s'étendent de la première à la deuxième bride de raccordement.
